# EUROPEAN PATENT SPECIFICATION

(11) **EP 0 925 723 B1**
(45) Date of publication and mention of the grant of the patent: **02.04.2003**
(21) Application number: 97310497.9
(22) Date of filing: 23.12.1997
(51) Int. Cl.: A23J 3/14, A23J 1/14, A23K 1/16, A23K 1/18, A23L 1/305

(54) **Protein-containing feedstuff and process for its manufacture**
Proteine enthaltendes Futtermittel und Verfahren zur Herstellung
Nourriture pour animaux contenant des protéines et procédé de préparation

(43) Date of publication of application: 30.06.1999
(73) Proprietor: Cargill BV, 1013 BL Amsterdam (NL)
(72) Inventor: Jhanjan, Sewlal, NL-1112 PG Diemen (NL); Nagelkerke, Adrianus Jacobus Pieternel, NL-3038 AJ Rotterdam (NL); Moes, Marco, NL-1902 PA Castricum (NL); Buurman, Hendrik Jan, NL-1381 GL Weesp (NL); Taverne-Veldhuizen, Wilhelmina, NL-3925 BT Scherpenzeel (NL); van Ee, Jan Hendrik, NL-1272 GR Huizen (NL)
(74) Representative: Fisher, Adrian John

(56) References cited:
- GB-A- 1 574 110
- US-A- 2 881 076
- US-A- 3 809 767
- US-A- 5 391 371
- PATENT ABSTRACTS OF JAPAN vol. 018, no. 344 (C-1218), 29 June 1994 & JP 06 086640 A (NISSHIN OIL MILLS LTD:THE), 29 March 1994,
- PATENT ABSTRACTS OF JAPAN vol. 018, no. 316 (C-1213), 16 June 1994 & JP 06 070692 A (NISSHIN OIL MILLS LTD:THE), 15 March 1994,
- BROWN P B ET AL: "USE OF SOY PROTEIN CONCENTRATES AND LECITHIN PRODUCTS IN DIETS TO COHO AND ATLANTIC SALMON" JOURNAL OF THE AMERICAN OIL CHEMISTS' SOCIETY, vol. 74, no. 3, March 1997, pages 187-193, XP000689845

## Description

### FIELD OF THE INVENTION

The present invention relates to certain processes for the production of protein-containing products that are suitable for use as or in feedstuffs, for example in aquaculture, to certain protein-containing products as such, and to methods of feeding livestock with certain protein-containing products.

### BACKGROUND OF THE INVENTION

Processes for concentrating or isolating protein from vegetable sources are known. For example, a conventional process for obtaining alkali-soluble, acid-precipitable protein comprises extracting the protein from a vegetable source, for example defatted soybean material, using water at a pH of from 6 to 10.5, separating the liquid extract from the remaining solids, precipitating the protein, typically glycinin, at a pH of 4.2 to 4.6 by the addition of acid, washing the precipitate and then drying the precipitate. However, it has recently been suggested that conventional washing is detrimental to the isoflavone content of the resultant isolate: thus, EP-A-647,408 discloses a process for preparing an isoflavone-rich vegetable protein isolate, which process comprises (a) extracting a vegetable protein material that contains isoflavones, e.g. soybean flakes, with an aqueous extractant having a pH above the isoelectric point of the said material, in particular a pH of from 6 to 10, in order to produce an aqueous extract of protein and isoflavones, (b) adjusting the pH of the aqueous extract to about the isoelectric point of the protein material, in particular by adding an acid such as acetic, sulphuric, phosphoric or hydrochloric acid, in order to precipitate the protein material; and (c) separating the precipitated protein material, which is thereafter either left unwashed or washed with just a limited quantity of water, such as less than 4 times the weight of the precipitated material.

US-A-2,881,076, which relates to the preparation of an edible vegetable protein that is particularly useful for treating meats, notes a further drawback of the conventional process involving alkaline extraction and acidic precipitation, which is that the longer-chain components of the native glycinin of soybean, which components are the better emulsifiers, are left in the residue of the extraction. This U.S. patent discloses a process for removing certain solubles from soybean material, which process comprises treating the soybean material with water at a pH in the vicinity of the isoelectric pH of the glycinin content of the soybean material (in particular at a pH of from 4.0 to 4.8), separating the resultant solution from the insoluble material and removing substantially all of the "beany taste ingredients" by washing the resultant solids with water. The solids may be dried in the resultant acid form but it is preferred to raise the pH to a value from 6 to 10.5 by the addition of an alkali, for example sodium hydroxide, or an edible inorganic buffering agent before the solids are dried.

US-A-3,365,440 discloses a process wherein a stream of soybean material, e.g. soybean flakes, containing a water-soluble portion is passed in counter-current relation with a stream of an aqueous solvent for that portion, for example an aqueous acid solution having a pH in the range of 4 to 5, the ratio of the streams being adjusted to provide a concentration of the water-soluble fraction in the solvent effluent stream of at least 2%. The resultant leach liquor effluent may be evaporated to a syrup consistency or spray-dried to a powder. The leached flakes or other soybean residue can be further processed for extraction of the alkali-soluble, acid-precipitable protein.

US-A-3,762,929 discloses a method of making a soy protein concentrate in which soybean flakes are subjected to an extraction with water at a temperature of from 20 to 50°C for a period of 30 minutes to 2 hours and at a pH of from 4.2 to 4.6, the extraction being carried out in the presence of from 0.5 to 4.0%, by weight of the soybean flakes, of a polysaccharide, in particular carboxymethyl cellulose, guar gum, sodium alginate, carrageenan, gum karaya, alginic acid or agar.

US-A-3,809,767 discloses a method of producing an edible, uniformly palatable vegetable protein concentrate from a vegetable protein material, a substantial or major proportion of which does not pass through a 40-mesh screen and which has a nitrogen solubility index (NSI) of more than 15% by weight. The vegetable protein material is subjected to an extraction process at about the isoelectric pH of the protein content to be recovered, typically from 4.0 to 4.8, and the liquid extract is separated off and discarded. The recovered insoluble vegetable protein material may be further washed at a "somewhat acid pH" and is then recovered by filtering, screening or centrifuging. The recovered material then has to be at least partially dried, in general to a moisture content of from 5 to 55% by weight, under controlled drying conditions such that the NSI is not reduced to a value below 15%. The partially dried material is then neutralised with an edible alkali or buffering agent to a pH of from 5.5 to 10.5. The neutralised material is then dried under controlled conditions to yield a protein concentrate having a good natural structure and texture and an NSI of at least 15% by weight.

US-A-3,895,003 discloses a process for producing a protein concentrate which comprises the steps of (a) finely grinding an oilseed meal such that 90% of the particles have a diameter of less than 100 µm, (b) air-classifying the resultant meal to produce a first coarse fraction and a first fines fraction that constitutes 60-90% by weight of the ground meal and of which 90% has a diameter of less than 45 µm, (c) ultra-finely grinding the first fines fraction so that 90% of the particles have a diameter of less than 20 µm, (d) air-classifying the ultra-finely ground material to produce a second coarse fraction and a second fines fraction, which latter is 50-90% by weight of the ground first-fines fraction and of which at least 80% of the particles are less than 20 µm in diameter, and (e) washing the second coarse fraction with water at a pH of 4 to 6, and separating a protein-containing residue from the liquid supernatant.

US-A-3,965,086 discloses a process for producing a protein concentrate which comprises (a) finely grinding an oilseed meal so that 90% of the particles thereby obtained are less than 100 µm in diameter and air classifying the ground meal to obtain a fraction characterised by its relatively high protein content and relatively low content of water-insoluble carbohydrate, and (b) washing that fraction in water at a pH of 4 to 6.

It is also known, however, that the digestibility of many vegetables, particularly the oilseed vegetables such as soybeans and other legumes, is interfered with by naturally occurring substances. The use of vegetable proteins in livestock feeding is limited by those anti-nutritional factors.

One sector of the animal feed industry where vegetable protein sources are not commonly used is the aquaculture feed industry. The most important and mostly used protein source in aquaculture is fishmeal. Fishing and the processing of fish to fishmeal has been put under pressure, however, because along with the fish needed, smaller fish and other species are caught, which can endanger the survival of some fish populations.

On the other hand, an increase of fish consumption can be expected, mainly due to several health-related reasons. Fish has some nutritional advantages over meat, such as a higher amount of polyunsaturated fats or lipids and low cholesterol levels.

World production of fishmeal is quite constant and not expected to increase in the future. The amount of fishmeal needed to produce fish feeds could double in the next decade, if aquaculture continues to expand as predicted (Hardy, 1995). (Bibliographic details of literature references herein are listed at the end of the description.) Therefore it is desirable to replace a part of, or the entire, fishmeal fraction of a feed by a vegetable protein source. If a vegetable protein source is to replace fishmeal, it has to meet certain requirements. The quality and composition of the fishmeal should be taken as a starting point: thus, the most important requirements for application of this vegetable protein source in fishfeed would be the high protein content, the low amount of anti-nutritional factors, and the processability.

The most limiting factors in using for instance soybean meal as a fishmeal replacer, are the oligosaccharides, phytic acid and protease inhibitors. According to Arnesen *et al*. (1989) and Krogdahl (1989), oligosaccharides have a significant negative effect on the nutrient absorption, on the faecal dry matter excretion and on the digestibility of fat by salmonids. According to Spinelli *et al*. (1983), the role of phytic acid in reducing the bioavailability of minerals from soybean meal is well known and has been excellently reviewed. According to several authors (Sandholm *et al*., 1976; Olli *et al*., 1989), salmonids are very sensitive to protease inhibitors. Protease inhibitors cause a reduction of the intestinal proteolytic activity, leading to an increase of the faecal excretion of protein.

Thus, when replacing fishmeal with a vegetable protein source, like soybean meal, it would be desirable to develop an efficient and effective process for treating vegetable protein sources in order to increase their digestibility and protein content. When replacing most fishmeal by such a vegetable protein source this could even be a prerequisite.

Many studies have been reported in which the replacement of fishmeal by different vegetable protein sources have been examined. Plant protein sources that can be used in fish feed are, for instance, rapeseed meal, soybean meal, soybean concentrate, soybean isolate, cottonseed meal, distillers' grain, and the like (Lim and Sessa (eds.), 1995). The quantities of the different types of protein that can be used in commercial fishfeed diets depend on several factors, including the nutritional value of the protein, the price of the protein, the presence of anti-nutritional factors in the protein source, and the ease with which the total feed may be pelletised (its "pelletisability"). The main reason for not using soybean isolate in fishfeed is the high price. Soybean concentrates could hitherto only be used to a limited extent, owing to the presence of anti-nutritional factors and to the poor pelletising properties.

### SUMMARY OF THE INVENTION

In a first aspect, the present invention provides a process for the production of a protein-containing product, characterised in that a source of vegetable protein (a) is subjected to a heat treatment, (b) is afterwards washed in one or more steps with water at a temperature of 50°C or lower, and (c) is afterwards subjected to a further heat treatment.

In a second aspect, the present invention provides a protein-containing product that comprises at least 55-60% of vegetable protein on a dry weight basis, from 0 to 2% of simple sugars on a dry weight basis, a fat content of 0 to 1% on a dry weight basis, and a moisture content of 0 to 12% of the dry weight of the said product, the product exhibiting a trypsin inhibitor factor of 1.0 mg trypsin inhibited per gram of said product, or less. In general, the protein-containing product is also characterised by a content of phytate (expressed as phytic acid) of 0 to 0.5%, on a dry weight basis.

In a third aspect, the present invention provides a composition in the form of a food for human consumption or a feed for livestock, which composition comprises a protein-containing product that has been produced by a process according to the first aspect of this invention, or which is a product according to the second aspect of this invention, together with at least one other ingredient selected from sources of nutrition and edible additives.

In a fourth aspect, the present invention provides a method of feeding human beings or livestock, characterised in that the human beings or livestock are provided with a protein-containing product that has been produced by a process according to the first aspect of the present invention, or which is a product according to the second aspect of the invention.

In a fifth aspect, the present invention provides a method of improving the processability, e.g. pelletisability, of a feedstuff for livestock, which feedstuff contains a vegetable-protein-containing product, characterised in that a protein-containing product is used that has been produced by a process according to the first aspect of this invention, and is incorporated into the feedstuff in an amount of more than 5% by weight of the total feedstuff.

### DETAILED DESCRIPTION OF EXEMPLARY EMBODIMENTS OF THE INVENTION

A process for the manufacture of a concentrated vegetable protein product is described hereinafter. An important application for such a concentrated vegetable protein source will be. in aquaculture as a complete or partial replacer of fishmeal in fishfeed.

In principle, any plant or plant part having a significant content of protein may come into consideration for use as the source of vegetable protein. Such plants include the oilseed vegetables such as soybean and other leguminous plants, the seeds of which (commonly referred to as legumes, beans or peas) are good sources of protein. The vegetable-protein source used as the starting material in the present process may, of course, be derived from two or more plants and/or plant parts. Furthermore, the source of vegetable protein may have been derived from the original plant or plant part via appropriate preliminary treatments such as dehulling or removal of husks or the like, flaking, the removal of at least part of the fat or oil content, and/or milling, grinding or comminution. Preferably, the source of vegetable protein used as the starting material in the present process contains at least 10% by weight of protein. The said starting material may be in any suitable form, e.g. grits, flakes, flour or meal. At present, particularly preferred materials that contain vegetable protein are soy flakes, soy flour and soy meal, especially defatted soy flakes, defatted soy flour and defatted soy meal. Texturized soy products however, which are treated with extruders, can also be used as raw materials for the production of a vegetable feedstock. The defatted soy flour contains about 50% of protein and less than 1.2% fat, on a dry-weight basis.

The vegetable-protein source is subjected to a first heat treatment. In certain embodiments, the heat treatment is carried out at a sufficiently high temperature and for a sufficient period of time to ensure that the protein is denatured such that the heat-treated vegetable-protein source has a protein dispersibility index (PDI) of 35% or less, preferably 30% or less, more preferably 25% or less. A typical heat-treated vegetable-protein source will have a PDI of about 20%. Normally, the vegetable-protein source will be heated in this preliminary heat-treatment to a temperature of at least 80°C, and preferably to a temperature of at least 90°C; normally, the vegetable-protein source will be heated to a temperature of up to 150°C, preferably up to 120°C, and more preferably up to 110°C. Typically, the temperature will be from 100-105°C. The duration of heating will depend, to a certain extent, on the selected temperature and the intended product characteristics; however, periods of from 5 to 60 minutes, e.g. from 15 to 30 minutes, come into consideration.

In certain preferred embodiments, the preliminary heat treatment is carried out in a desolventising-toasting (DT) apparatus. Desolventising-toasting treatments are well known in the soybean-processing art for the removal of solvent (hexane) from the soybean material after defatting, and also to optimise the nutritional value of the soybean meal, in particular by inactivation of the trypsin inhibitor activity and by denaturation of the soy protein in order to make it- susceptible to attack from proteolytic enzymes. Conventionally, the soybean meal enters the DT apparatus with a temperature of 55-60°C, and is then, to use the usual term of art, "toasted" (i.e. cooked) at 100-105°C at a moisture level of from 16-24%, and typically about 20%, for 15-30, and typically 20-25, minutes. The toasted defatted soybean meal or other vegetable-protein source typically emerges from the DT apparatus at a temperature of about 100°C and may therefore be subjected to a cooling step before it is subjected to the washing stage. For convenience, the heat-treated material will be referred to hereinafter as "toasted", although it should be understood that such references include material that has been heat-treated in a manner other than in a DT apparatus.

The toasted defatted soybean meal or other vegetable-protein source is washed with water at a temperature of up to 50°C. In general, the water should not exhibit a significant level of alkalinity and normally will have a pH no higher than 9.5. Accordingly, it is, in general, possible to use mains or tap water for washing the toasted vegetable-protein source, since such water has a pH typically within the range of 5.5 to 9.5. Preferably, the pH will be 8 or lower, more preferably 7.5 or lower.

In certain preferred embodiments, the toasted defatted soybean meal or other vegetable-protein source is washed with water having a pH of about 7 (neutral) or, especially, less than 7 (hereinafter also called acidic water, which expression includes acidified water and acidulated water), It is preferred that the pH be at least 4, in order to minimise solubilisation of protein. The pH of the washwater in certain embodiments is preferably less than 6, more preferably between 4.3 and 5.5. In certain other, and currently preferred, embodiments, the pH will be between 5.5 and 7. The water may be obtained from any supply that is suitable for use in the production of feedstuffs; for example, the water may be mains water, potable water from natural sources such as springs, desalinated seawater or distilled or deionised water. The pH of the washwater may be lowered to the desired pH value by the addition of an acid, preferably a food-grade or feed-grade acid. The acid may be an inorganic acid, for example sulphuric, nitric, phosphoric or hydrochloric acid, or an organic acid, for example citric or acetic acid. A mixture of two or more acids may, of course, be used.

Furthermore, phytase can, in general, be included in this water in at least one washing step, preferably in at least half of the washing steps and more preferably in all of the washing steps, so that during this process, the phytate-content of the soybean meal or other vegetable-protein source is lowered. Phytase of microbial origin is currently commercially available, e.g. from Messrs. Gist Brocades or Messrs. NOVO. The amount of phytase will generally be from 0 to 1% by weight relative to the weight of vegetable protein source, e.g. from 0.001 to 1.0%, typically 0.01 to 1.0%.

The pH which is recommended, in particular a pH below 7, is a compromise to achieve the following goals. A primary goal is that comparatively little protein, if any, will tend to dissolve in the washwater. A second goal is to keep microbial growth at a minimum. A third goal is to keep the phytase (if used) active, and a fourth goal is to make the washing process as effective as possible, especially with regard to meeting end-use requirements, for example when the product is to be used as a fishmeal replacer.

The washing of the defatted soybean meal or other vegetable-protein source may be carried out in any suitable manner, e.g. by continuous washing, batchwise washing, counter-current washing, co-current washing or centrifugal washing. It is preferably carried out counter-currently: a counter-current process is efficient and economical in that it permits removal of sugars with less water. In general, the washing will be'effected in a plurality of steps, typically in three or more, e.g up to seven, steps, preferably of 10 to 60, more preferably 15 to 30 minutes, e.g. about 20 minutes each. Washing may be effected in tanks. The ratio of water to soybean meal (or other vegetable protein source) is normally from 10:1 to 4:1, e.g. between 7 to 1 and 4 to 1, by weight By choosing the right ratio of washwater:soybean meal (or other vegetable-protein source), the extraction can be optimized.

It has been found that when the temperature of the washwater does not exceed 20°C comparatively little protein, if any, will tend to dissolve into the washwater. If too much protein were to dissolve, this would lower the protein content of the end-product and lower the yield. Nonetheless, in view of the improved processability (discussed in greater detail hereinafter) that may be obtained in accordance with the present invention, it may on occasion be tolerable to employ a higher temperature in the washing stage, especially a temperature not exceeding 35°C. Provided that the water can still be used to effect washing, there appears to be no precise lower temperature limit, although phytase activity will be lower at low temperature. It may prove convenient to use washwater having a temperature higher than 5°C.

In certain preferred embodiments, the toasted defatted soybean meal (or other vegetable-protein source) is washed in a plurality of steps and the washwater used in each washing step has a lower content (by weight, on a dry matter basis) of soluble substances - in particular, soluble substances extracted from the toasted defatted soybean meal (or other vegetable-protein source) - than the washwater used in the preceding step. In other words, the defatted soybean meal (or other vegetable-protein source) is washed in a series of steps using washwater of progressively lower contents of soluble substances, in particular extracted soluble substances. Thus, for example, during the last step, the toasted defatted soybean meal (or other vegetable-protein source) will normally be washed with fresh washwater. The water which is left or recovered after this step is used for the washstep before the last one in another cycle, i.e. in the treatment of another batch of vegetable-protein source, and so on, so that the first washstep is carried out with the least-fresh water.

After every washstep, the washed material and the washwater are generally separated. In this way, most water can be used again. Preferably, the toasted defatted soybean meal (or other vegetable-protein source) is partially dehydrated by means of hydro-cyclones (a battery of at least three cyclones will normally be used), although other means, such as a centrifuging and pressing step, may be used instead. The dry-matter content of the washed product after separation of the washwater is generally from 5 to 25%, preferably from 10 to 20%, by weight. By washing with water with a pH between 4 and 7 and phytase, all oligosaccharides and most phytate will in general be mobilized into the water. The smaller hydrophilic proteins also dissolve into the water. Beneficial factors such as isoflavones will stay in the soybean meal (or other vegetable-protein source). Because of the fact that most small hydrophilic proteins are already dissolved, the leak-out of proteins of the final product, especially when used in aquaculture as a fishfeed, will be minimal: because there is less loss of protein from the feed, the use of such a fishfeed will be more efficient.

The vegetable-protein source, after it has been subjected to the preliminary heat treatment and washing, is subjected to a further heat treatment, which conveniently may comprise, or be constituted by, a thermal drying operation. In general, the washed material is subjected, in this further heat treatment, to a temperature of at least 80°C, preferably at least 90°C; in general; the temperature will not exceed 150°C, and is preferably no higher than 120°C. Typically, the vegetable-protein source will attain a temperature of 100-105°C. The heat-treatment is normally carried out such that it results in a product in which the protein is further denatured, preferably strongly denatured: in general, the PDI of the heat-treated product will be 20% or less, preferably 15% or less and more preferably 12% or less. Typically, the products have a PDI of 5-12%, e.g. 8-12%. In general, the heat-treatment is carried out for a period of 10 to 60 minutes, for example 15-30 minutes and typically about 20 minutes. Interestingly, it has been found that it is desirable for the heat-treated product to be as dark as possible, in particular when it is to be used as or in a feedstuff for fish, in particular salmonids. Accordingly, the heat-drying treatment is desirably carried out such that the product develops a brown colour; although the Applicant does not wish to be bound by any theory, it appears that the development of the brown colour indicates that a process in addition to mere drying is taking place, although at present it is believed that the browning is not due to any significant burning of the product.

After the last washing step, usually as much water as possible is extracted from the toasted defatted soybean meal (or other vegetable-protein source) by mechanical means, for instance using a decanter/press or centrifuge/press. Dewatering will generally raise the dry-matter content of the washed material to from 25 to 35%, preferably 26 to 33%, by weight.

After washing and, if effected, after dewatering, the washed toasted defatted soybean meal (or other washed toasted vegetable-protein source) is dried, usually to a moisture content of 12 percent or less, preferably from 5 to 12 percent and typically from 5 to 10 percent, e.g. 8 percent. Drying - which, as noted above, may constitute, or be part of, the heat-treatment to which the washed material is to be subjected - may be effected, for example, by means of a fluidized-bed dryer, a superheated-steam fluidized-bed dryer, a rotating-drum dryer, a spray dryer or belt dryer. Hot air and live steam come into consideration as heating media: thus, one might use, for example, a fluidized-bed dryer with inlet steam at a temperature of about 300°C and an outlet temperature of about 100°C, or a rotating drum dryer with an inlet air temperature of about 500°C and an outlet air temperature of 100°C. The best way of drying known to the Applicant is with a vibrating fluidized-bed dryer. The advantages of a vibrated fluidized-bed dryer, compared with a static fluidized-bed dryer are higher thermal efficacy and drying capacity. Reduction of the amount of protease inhibitors may take place during the drying step.

It has not been found necessary to subject the washed vegetable-protein source to any chemical treatment prior to the subsequent heat-treatment or drying stage. Thus, in general, such a chemical treatment - for example neutralisation using an alkali or alkaline-reacting chemical - is not carried out between the washing and heat-treatment/drying steps.

After drying, the proteinaceous product generally comprises at least 60, e.g. about 65 to about 80, and typically 70 to 75, percent protein, on a dry weight basis. It is particularly preferred that the product contain at least 70% by weight of protein, on a dry weight basis. The product generally comprises 0 to about 2 percent simple sugars, as measured by HPLC, which includes galactose, glucose, fructose, saccharose, raffinose and stachyoseThe maximum level of trypsin inhibitor factor is generally 1.0 mg trypsin inhibited per gram of product. The maximum fat content of this protein concentrate is generally 1 percent. In general, the content of phytate (calculated as phytic acid) is 0.5% by weight or less. Certain preferred products also have a content of isoflavones that equals or exceeds the isoflavone-content of normal defatted soybean meal (about 900 ppm).

The proteinaceous product obtained after drying may be utilised as a component of a foodstuff or feedstuff without the need for such further processing as the addition of an alkali or alkaline-reacting substance as taught in the prior art, for example to effect neutralisation or as part of an alkaline solubilisation, acid precipitation process; without the need to add a polysaccharide as taught in the prior art; and without the need to provide a protein-rich fraction by means of fine grinding followed by air classification as taught in the prior art. Furthermore, the washing of a vegetable protein source with water having a pH of less than 7, especially if containing phytase, can surprisingly yield a protein concentrate that exhibits distinct advantages over prior-art feedstuffs, especially when the protein concentrate obtained after such washing is used in feedstuffs for the nutrition of fish, in particular salmon, and of piglets.

It will be seen that in the production of a protein concentrate according to the present process, it is possible largely to retain the isoflavones in the protein fraction despite the washing step. This is regarded as surprising, since EP-A-647,408 teaches that, for the preservation of minor components such as isoflavones, the protein product either should not be washed or should be washed only to a very limited extent.

The washing of a vegetable protein source by the process of the present invention offers a means of increasing the nutritional and health value and the digestibility of the vegetable feedstock. Thus, the washing with water having a pH of less than 7 has been found to increase the protein content of the vegetable feedstock and, in this way, a concentrated protein source with a low fat content may be made. Furthermore, it has been found that the washing of toasted vegetable-protein sources, such as toasted defatted soybean meal, in accordance with the present invention, results in the washing out of mono-, di- and oligosaccharides. It has also been found that some hydrophilic proteins will be removed and this will increase the oil-binding capacity of the resultant feed ingredient and the stability of a fishfeed based upon it; during feeding in aquaculture, less protein will leak out into the water.

By washing with water with a certain pH, instead of other extracting liquids, beneficial, health related factors like isoflavones will be retained. In soybean meal, the isoflavones (for instance genistein and daidzein), are present in high concentrations. By producing a soy concentrate with an ethanolic solution, or by washing with water at high pH, these isoflavones will be extracted. By washing in accordance with the present process however, these isoflavones will be preserved: isoflavones are-not influenced by this process, so that the content of isoflavones in this product can be kept at the highest level. The isoflavones are anti-oxidizing agents and have several health-related advantages.

By adding microbial phytase to the washwater, the total amount of phytate can be reduced, so that the availability of phosphate and minerals will increase.

It has been found that the treatment of vegetable protein sources in accordance with this invention increases the protein content and digestibility thereof to an extent that permits their use as or in feedstuffs. The expression "feedstuffs" is to be construed broadly to include a feed, or a constituent nutrient of a feed. The feedstuff may be applied to the nutrition of livestock (including monogastric animals, including mammals, such as pigs and their young, and also including poultry and the like; other farm animals; fish, for example salmonids such as salmon or trout; and crustaceans, for example shrimps), pets, working animals, and animals kept for sporting purposes. The concentrated protein product can also be used as or in a food for humans.

In fishfeed, this concentrated protein product can replace at least 20 percent fishmeal. Another advantage of the use of this concentrated protein product is that it has good pelletising properties: thus, when making a fishfeed containing 20% of the concentrated protein product of this invention pelletising is very satisfactory. Furthermore, it has been found that the final feed does not fall apart too quickly when put into water, and that it can be used in pneumatic feeding systems. Because of the texture and the fact that some hydrophilic proteins are washed out, the oil holding capacity of this feed ingredient is very good, compared with other protein sources. This makes it very easy to add fish oil, oil from other origins, fractions of oils or derivatives of oils to this protein source at high concentrations, so that the manufacturing of the final feed is relatively simple. The protein source can be adapted to specific applications, e.g. in fishfeed, by adding for instance specific and/or modified fatty acids, bio-colorants, proteins, amino acids, carbohydrates or lipids.

This proteinaceous product can not only be used in aquaculture, but also in many other applications which may include the use in pet food, pig growth starter and in food for human consumption, also because the texture of this product is very suitable. The amounts of this concentrated vegetable protein source are not restricted to a certain level, because virtually all of the antinutritional sugars are washed out.

Foods for human consumption may include the following: meat imitations, protein-rich beverages, sausages, imitation cheese, cow-milk replacers (for people that are allergic to cow-milk) and the like. The amount of this protein concentrate which could be incorporated into these products depends on the food-product formulation and properties.

### EXAMPLES

The following examples are for illustrative purposes only. As elsewhere in this specification, percentages and parts are by weight unless otherwise stated.

### Example 1:

The following table illustrates the physical and chemical properties of the concentrated soy protein product (A1 and A2), compared with those of soybean concentrate (SBC), defatted soybean meal (SBM) and texturized soybean meal (TSP). Note that the concentrated soy protein products are prepared under different conditions, from different raw materials. A1 is produced from texturized soybean meal, A2 is produced from toasted defatted soybean meal. During the production of A2, also phytase was added.

**TABLE 1**

| Physical and Chemical Properties of Soy Products | | | | | |
|---|---|---|---|---|---|
| % of dry solids | SBC | SBM | TSP | A1 | A2 |
| Protein | 68 | 54 | 49 | 73 | 69 |
| Fat | 0.3 | 1.5 | 0.5 | 0.3 | 0.6 |
| Galactose | <0.3 | <0.5 | <0.5 | <0.3 | <0.3 |
| Glucose | <0.3 | <0.5 | <0.5 | <0.3 | <0.3 |
| Fructose | <0.3 | <0.5 | <0.5 | <0.3 | <0.3 |
| Saccharose | <0.3 | 5.0 | 5.56 | <0.3 | <0.3 |
| Raffinose | <0.3 | 1.0 | 1.04 | <0.3 | <0.3 |
| Stachyose | <0.3 | 4.0 | 3.98 | <0.3 | <0.3 |
| Fiber | 2.8 | 4.0 | 2.8 | 2.7 | 5.1 |
| Water (%,as is) | 6 | 8 | 6 | 7 | 6 |
| TIA | | <2.0 | <1.0 | 0.3 | <1.0 |
| Phytic acid | 2.0 | 1.5 | 1.5 | 1.2 | 0.4 |
| Isoflavones (ppm) | 106 | 837 | - | - | 934 |

### Example 2:

A three week study with Atlantic Salmon was conducted. In this study, experimental products A1 and A2 were compared with soybean concentrate diet, a commercial reference diet and a standard fishmeal feed. The inclusion in the feed of the soybean concentrate and the products A1 and A2 is 5% in each case. The feed is produced as a pellet (4 mm). Per diet, 65 fish were tested with initial weights of 150 grams. The temperature of the seawater was 7.3°C. In Table 2, the results are given.

**TABLE 2**

| Composition of fishfeeds tested and results of digestibility test. Duration of this test: 3 weeks Standard Reference Soyconcentrate | | | | | |
|---|---|---|---|---|---|
| Product | diet | diet | diet | A1 | A2 |
| Pellet size | 4.0mm | 4.0mm | 4.0mm | 4.0mm | 4.0mm |
| No.of fish per tank | 65 | 65 | 65 | 65 | 65 |
| Initial weight per fish(g) | 150 | 150 | 150 | 150 | 150 |
| Sea water temp.(°C) | 7.3 | 7.3 | 7.3 | 7.3 | 7.3 |
| Dry matter (%) | 94.8 | 94.4 | 92.9 | 91.9 | 92.3 |
| Protein (%, DM) | 50.6 | 48.4 | 48.8 | 49.6 | 49.5 |
| Fat (%,DM) | 29.6 | 27.7 | 27.8 | 26.6 | 26.7 |
| Ash (%, DM) | 9.9 | 9.0 | 9.4 | 8.5 | 8.2 |
| Non-fish protein (% DM) | 9.9 | 14.9 | 14.0 | 15.3 | 15.6 |
| Protein digestibiliry (%) | 89.2 | 88.3 | 88.4 | 89.1 | 88.5 |
| Protein digestibility (% of standard diet) | 100 | 99 | 99 | 100 | 99 |
| Fat digestibility (%) | 73.4 | 84.1 | 84.5 | 86.9 | 85.9 |
| Fat digestibility (% of standard diet) | 100 | 115 | 115 | 118 | 117 |
| Feed consumption (FC),(%BW/d) | 1.00 | 1.05 | 1.00 | 1.00 | 1.02 |
| FC (% of standard diet) | 100 | 105 | 99 | 99 | 102 |
| Feed conversion ratio (FCR), (kg DM/kg growth) | 0.73 | 0.76 | 0.69 | 0.74 | 0.76 |
| FCR (% of standard diet) | 100 | 103 | 95 | 101 | 104 |
| Specific growth rate (SGR),(%/d) | 1.22 | 1.23 | 1.27 | 1.20 | 1.21 |
| SGR (% of standard diet) | 100 | 101 | 104 | 98 | 99 |
| Note: DM = dry matter; BW = body weight | | | | | |

From this test can be concluded that the diets which contain the experimental products (A1 and A2) give the same performance as the other diets. The protein- and fat digestibility of both A1 and A2-based diets tends to be somewhat better than the other diets, the feed consumption tends to be about the same, and the feed conversion and specific growth rate somewhat less. No significant differences were found.

### Example 3:

Two four-week studies with piglets were conducted. In the first study, texturized soybean meal is compared with two other protein sources that are used in piglet feed. These are skimmed milkpowder and soybean meal. In the second study, the texturized soybean meal is compared with experimental product A1. The feed is produced as a pellet (4 mm). The pellets are produced with the addition of steam. Pelleting temperature is about 70°C. In both studies Hypor piglets, weaned at about 26 days, are used. Both experiments were designed as split litter trials (3 to 5 piglets per half litter). Per comparison, at least 15 complete litters were used.

In Table 3A, the composition and analysis of the experimental diets are given.

**TABLE 3A**

| Composition and analysis of the experimental diets (SMP = skimmed milk powder, TSP = texturized soybean meal, SBM = soybean meal and A1 = the experimental product) | | | | | |
|---|---|---|---|---|---|
| | TRIAL 1 | | | TRIAL 2 | |
| | SBC | SBM | TSP | TSP | A1 |
| **Raw materials (%)** | | | | | |
| Skimmed milkpowder | 5.0 | - | - | - | - |
| Soybean meal | - | 5.0 | - | - | - |
| Extruded soybean meal | - | - | 5.0 | 5.0 | - |
| Experimental product A1 | - | - | - | - | 5.0 |
| Fishmeal | 7.5 | 7.5 | 7.5 | 6.7 | 5.4 |
| Cereals | 60.0 | 60.0 | 60.0 | 60.0 | 61.2 |
| Cereal by-products | 10.5 | 10.5 | 10.5 | 10.5 | 10.5 |
| Pre-cooked cereals | 6.8 | 6.8 | 6.8 | 7.0 | 70 |
| Lactose | 4.5 | 4.5 | 4.5 | 4.5 | 4.5 |
| Meatrneal | 2.5 | 2.5 | 2.5 | 2.5 | 2.5 |
| Fat | 0.5 | 0.5 | 0.5 | 0.5 | 0.5 |
| Premix* | 2.7 | 2.7 | 2.7 | 3.3 | 3.4 |

| **Calculated nutrients (%)** | | | | | |
|---|---|---|---|---|---|
| Crude protein | 16.9 | 17.5 | 17.8 | 17.3 | 17.3 |
| Crude fat | 3.7 | 3.8 | 3.7 | 3.8 | 3.6 |
| Crude fibre | 3.4 | 3.6 | 3.5 | 3.8 | 3.9 |
| Ash | 4.7 | 4.7 | 4.6 | 5.0 | 4.8 |
| Moisture | 11.3 | 11.6 | 11.4 | 10.8 | 10.8 |
| Net.energy (kJ/kg) | 9684 | 9613 | 9617 | 9567 | 9563 |
| Ileal digestibility Lysine | 0.89 | 0.89 | 0.90 | 0.91 | 0.91 |
| Il.dig.methionine & cystine | 0.53 | 0.53 | 0.53 | 0.53 | 0.53 |
| Phosphorus | 0.65 | 0.64 | 0.64 | 0.66 | 0.66 |
| Calcium | 1.03 | 0.97 | 0.98 | 0.95 | 0.92 |
| Sodium | 0.24 | 0.22 | 0.22 | 0.28 | 0.27 |

| **Quality control of the feed** | | | | | |
|---|---|---|---|---|---|
| Crude protein (%) | 16.8 | 17.7 | 17.8 | 17.1 | 17.6 |
| Crude fat (%) | 4.0 | 4.1 | 3.8 | 3.8 | 3.8 |
| Moisture (%) | 11.3 | 11.0 | 10.7 | 10.8 | 10.7 |
| Hardness | 8.0 | 7.1 | 7.6 | 10.7 | 9.0 |
| Durability | 98.2 | 97.6 | 97.4 | 98.2 | 97.8 |

| | | | | | |
|---|---|---|---|---|---|
| ∗: Premix contains vitamins, minerals, amino acids, growth promoters and organic acids. | | | | | |

In Table 3B, technical results of both studies are given.

**TABLE 3B:**

| Technical results of the first study in which texturized soybean meal-diet is compared to the skimmed milkpowder-diet and separately compared to the soybean meal-diet | | | | | | |
|---|---|---|---|---|---|---|
| | TRIAL 1 | | TRIAL 2 | | | |
| | TSP versus SMP | | TSP versus SBM TSP versus A1 | | | |
| | TSP-diet | SMP-diet | TSP-diet | SBM-diet | TSP-diet | A1-diet |
| n(number of litter halves) | 17 | 17 | 15 | 15 | 15 | 15 |
| | | | | | | |
| Weight at onset trial (kg) | 7.9 | 7.8 | 8.1 | 8.0 | 8.2 | 8.2 |
| Weight after 14 days | 10.2 | 10.4 | 9.9 | 9.9 | 10.6 | 11.0 |
| Weight after 28 days | 16.8 | 16.8 | 16.5 | 16.8 | 17.9 | 18.7 |
| | | | | | | |

| **Period 1 (0-14 days)** | | | | | | |
|---|---|---|---|---|---|---|
| Growth (g/day) | 167 | 180 | 136 | 131 | 174 | 201 |
| Feed intake (g/day) | 296 | 308 | 264 | 267 | 285 | 302 |
| Feed efficiency | 0.552 | 0.579 | 0.495 | 0.487 | 0.606 | 0.656 |
| Feed conversion ratio | 1 8 | 1.7 | 2.0 | 2.1 | 1.7 | 1.5 |
| Diarrhoea occurrence (%)* | 20.6 | 10.9 | 20.5 | 28.1 | 16.7 | 17.1 |
| Diarrhoea severity² | 1.7 | 1.5 | 1.6 | 1.7 | 1.4 | 1.7 |
| | | | | | | |

| **Period 2 (15-28 days)** | | | | | | |
|---|---|---|---|---|---|---|
| Growth (g/day) | 469 | 460 | 489 | 474 | 517 | 548 |
| Feed intake (g/day) | 751 | 745 | 751 | 747 | 796 | 821 |
| Feed efficiency | 0.625 | 0.620 | 0.652 | 0.635 | 0.647 | 0.667 |
| Feed conversion ratio | 1.6 | 1.6 | 1.5 | 1.6 | 1.6 | 1.5 |
| Diarrhoea occurrence (%)* | 6.3 | 4.2 | 5.2 | 6.2 | 10.5 | 7.1 |
| Diarrhoea severity² | 1.5 | 1.5 | 1.6 | 1.4 | 1.3 | 1.5 |
| | | | | | | |

| Total period (0-28 days) | | | | | | |
|---|---|---|---|---|---|---|
| Growth (g/day) | 318 | 320 | 312 | 303 | 346 | 375 |
| Feed intake (g/day) | 523 | 527 | 508 | 507 | 541 | 562 |
| Feed efficiency | 0.604 | 0.605 | 0.613 | 0.596 | 0.637 | 0.666 |
| Feed conversion ratio | 1.7 | 1.7 | 1.6 | 1.7 | 1.6 | 1.5 |
| Diarrhoea occurrence (%)* | 13.5 | 7.6 | 12.9 | 17.1 | 13.6 | 12.1 |
| Diarrhoea severity² | 1.6 | 1.5 | 1.6 | 1.6 | 1.4 | 1.7 |

| | | | | | | |
|---|---|---|---|---|---|---|
| *: Diarrhoea occurrence (%): (^{times diarrhoea scored}/_{(number of pens*number of days)})*100* | | | | | | |
| ²: Diarrhoea severity: ^{(flat manure*1-diarrhoea*2+watery faeces*3)}/_{(times diarrhoea scored)} | | | | | | |

Texturized soybean meal leads to equal technical results, but to significantly more diarrhoea during the first two weeks after weaning, compared with skimmed milkpowder. Compared with standard soybean meal, the use of texturized soybean flour in a weaner diet leads to a significantly better feed efficiency and to significantly less diarrhoea during the first two weeks after weaning.

From trial 2 can be concluded that the A1-based product leads to better results in just-weaned piglets, compared with a texturized soybean meal. The significant positive effect of A1 was seen on growth and feed efficiency. No significant differences in diarrhoea occurrence are seen.

### Example 4:

On a pilot-plant scale, extruded defatted soybean meal was washed continuously with fresh tap water. About 300 kg of extruded defatted soybean meal was added to a tank, containing 2700 litres of tap water with a temperature of about 20°C. In this tank, a perforated round tube (diameter of holes 1 mm) and a tube with an inner diameter of 10 mm were placed. Through these tubes, air was blown, so that the water and material were mixed thoroughly. The tank was drained.

The extruded defatted soybean meal was continuously sprinkled for 2 hours with tap water of about 20°C, with a water flow of about 1.8 m³/h.

After two hours, the tank was drained completely on a screen, with a diameter of about 1.5 m. The diameter of the holes in this screen was about 4 mm.

The washed material was pressed, to remove as much water as possible. After pressing, the material was dried with a lamella dryer, with a temperature of about 100°C, to a moisture content of about 7%. Protein content of this product was about 73% on a dry-weight basis. The Protein Dispersibility Index of the dried material was about 5.

### Example 5:

On a pilot-plant scale, toasted defatted soybean meal was washed continuously with fresh tap water. About 50 kg of extruded defatted soybean meal was added to a tank, containing 450 litres of tap water with a temperature of about 20°C. This tank was aerated by a perforated round tube (diameter of holes 1 mm) and a tube with an inner diameter of 10 mm. Goal of aeration was to mix the water and material properly. The tank was drained.

The toasted defatted soybean meal was continuously sprinkled for 2 hours with tap water of about 20°C, with a water flow of about 0.9 m³/h.

After two hours, the tank was drained completely on a screen, with a diameter of about 1.5 m. The diameter of the holes in this screen was about 4 mm. The washed material was pressed, to remove as much water as possible. After pressing, the material was dried on a fluid-bed dryer with a lamella dryer. Air inlet temperature of this dryer was about 300°C. Outlet temperature about 100°C. Retention time of the product in this dryer was about 20 minutes. Temperature of the dried product was about 100°C. Moisture content of the dried material was about 6%. Protein content of this product was about 71% on a dry-weight basis. The Protein Dispersibility Index of the dried material was about 5.

### Example 6:

A counter-current washing process was simulated on a laboratory scale as follows. The water which was used for this process was obtained by soaking toasted defatted soy flakes for 60 minutes in tap water. The temperature of the water was 20°C and the ratio of soy flakes:water was 1:10, by weight. After 60 minutes, the water was separated from the toasted defatted soy flakes by decanting. The dry matter content of the water so obtained was 5.4% by weight, 18.2% by weight of this dry matter being protein. A part of this water was diluted to provide water fractions with dry matter content of, respectively, 2.8%, 2.0% and 1.0%, by weight. The pH of all of these samples of water was brought to 5.5 by means of diluted hydrochloric acid.

The counter-current washing process was carried out by first washing 200 grams of toasted defatted soy flakes for 20 minutes with 1,500 ml of washwater, taken from the sample having a dry matter content of 5.4%. After 20 minutes, the water was decanted off and the flakes were pressed in order to effect further dewatering. To the resultant flakes, 1,500 ml of water with a dry matter content of 2.8% were added and mixed thoroughly. After 20 minutes, the water was decanted off, the flakes were pressed and 1,500 ml of water with a dry matter content of 2.0% were added. After 20 minutes, the water was decanted off, the flakes were pressed and 1,500 ml of water with a dry matter content of 1.0% were added to the flakes. After 20 minutes of washing, the water was decanted off, the flakes were pressed and the flakes so obtained were subjected to a final washing step of 20 minutes' duration, using 1,500 ml of tap water, the pH of which had been lowered to 5.5 with diluted hydrochloric acid. After decanting off the washwater and pressing, the soy flakes were dried in a vacuum oven for 12 hours at 60°C. The protein content of these flakes was 73.1%, on a dry matter basis.

The foregoing procedure may be repeated using samples of water containing 0.02% by weight of microbial phytase (relative to the weight of the defatted soy flakes used as the vegetable protein source) in order to obtain a soy protein concentrate having a very low content of phytate.

### Example 7:

150 kg of soy flakes were put into a tank and 750 litres of fresh tap water were added. This was mixed for 30 minutes with the help of a top mixer (speed 340 rpm). This was necessary because the product settles easily. After washing, the slurry was filtered in a finisher (FMC model 35, screen size 0.51 mm), with a pressure on the outlet of 40 bar. The washed soy flakes were recycled for further washing and the washwater was sent to a 5 effects falling-film evaporator. To the recycled, washed soy flakes, water was added up to the final volume of about 850 litres and this was mixed again for 30 minutes, as described above. After this wash step, another wash step was carried out.

After the last dewatering step, the soy flakes were dried in a direct fire drier, with a good control on the temperature. Drying (exit air) temperature was between 93.3 to 143.3°C . The product was dried up to a moisture content of at maximum 10%.

The same experiment was carried out with acidic washwater. Sulphuric acid was added to the water, so that the pH of the mixture soy flakes and water was 5.0. At every new wash step, the pH was adjusted to 5.0. In the table below, the chemical analyses of these test products are given (percentages on as is basis).

| Drying temperature (°C) | pH | Moisture (%) | Protein (%) | Protein % DW-basis | Fibre (%) | PDI | Ash (%) | TIA (mg/g) |
|---|---|---|---|---|---|---|---|---|
| Starting material | 6.8 | 11.3 | 46.5 | 52.4 | 4.5 | 23 | 5.7 | 1.5 |
| 93.3 | 7.2 | 13.7 | 52.5 | 60.8 | 8.0 | 8 | 3.5 | 0.3 |
| 110 | 7.2 | 9.1 | 55.9 | 61.4 | 8.7 | 7 | 3.7 | 0.4 |
| 121.1 | 7.1 | 5.2 | 58.3 | 61.5 | 8.4 | 6 | 3.9 | 0.3 |
| 143.3 | 7.1 | 4.1 | 55.7 | 58.1 | 9.8 | 5 | 4.1 | 0.3 |
| Starting material | 6.8 | 11.2 | 47.3 | 53.3 | 4.1 | 24 | 5.9 | 0.7 |
| 110 | 4.5 | 4.2 | 64.3 | 67.1 | 6.8 | 1 | 5.7 | 0.3 |
| 110 | 4.8 | 5.1 | 61.5 | 64.8 | 8.3 | 1 | 3.9 | 0.3 |

### Example 8:

The technical and physical properties of product A2 were tested. Pellet hardness, pellet length, expansion, and processability were measured and the final feeds were also visually checked. As references, traditional soy concentrate and fishmeal were taken into account. The inclusion rates of product A2 in the final feeds were 10, 15, 20 and 25% of the total feed. The aim of this test was to conclude whether A2 had the same technical effect as fishmeal (as this is not the case with soy concentrates).

As earlier tests have shown, traditional soy concentrate is a difficult raw material in fishfeed production. This was not the case with the A2 product however. The binding properties of the A2 product are as good as the binding properties of fishmeal A2 also gave the same expansion as fishmeal. The latter is important in order to get enough fat into the pellets (oil-holding capacity). Both these parameters limit the usage of traditional soy concentrates in fishfeed production. The conclusion of these tests was that the A2 product has much better technical effects than traditional soya concentrates and is as good as fishmeal.

Thus, although the ease with which feeds containing the present vegetable-protein concentrates can be pelletised may depend also upon the other ingredients, tests have shown that the incorporation of concentrated vegetable-protein products of this invention into typical feeds at a level of more than 5%, e.g. more than 10%, such as 15% or more, or even 20% to 25% by weight of the final feed does not present a problem with regard to pelletisation. This represents a distinct improvement over conventional soya products, which cannot successfully be incorporated at levels higher than 5% by weight.

### BIBLIOGRAPHY

Lim, C.E. and D.J. Sessa (eds.), *Nutrition and Utilization Technology in Aquaculture*, AOCS Press Illinois, United States, 1995.

Hardy, R.W., "Current issues in salmonid nutrition", *Nutrition and Utilization in Aquaculture*, Lim, C.E. and D.J. Sessa (eds), AOCS Press Illinois, United States, 1995, pp. 26-35.

Arnesen, P., Brattas, L.E., Olli, J. and A. Krogdahl, "Soybean carbohydrates appear to restrict the utilization of nutrients by Atlantic salmon", *The Proceedings of the Third International Symposium on Feeding and Nutrition in Fish,* Takeda M. & T. Watanabe (eds). August 28-September 1, 1989. Toba, Japan, pp. 273-280.

Krogdahl, A., "Alternative protein sources from plants contain antinutrients affecting digestion in salmonids", *The proceedings of the third international symposium on feeding and nutrition in fish*, Takeda M. & T. Watanabe (eds). August 28-September 1, 1989, Toba, Japan, pp. 253-261.

Spinelli, J., Houle, C.R. and J.C. Wekell: "The effect of phytates on the growth of rainbow trout fed purified diets containing varying quantities of calcium and magnesium", *Aquaculture*, vol. 30, 1983, pp. 71-83.

Sandholm, M., Smith, R.R., Shih, J.C.H., and M.L. Scott, "Determination of antitrypsin activity on agar plates: relationship between antitrypsin and biological value of soybean for trout", *Journal of Nutrition*, vol 106, 1976, pp. 761-766.

Olli J., Krogdahl, A., and T. Berg Lea, "Effects of soybean trypsin inhibitor activity on nutrient digestibility in salmonids fed practical diets containing various soybean meals", *The proceedings of the third international symposium on feeding and nutrition in fish,* Takeda M. & T. Watanabe (eds). August 28-September 1,1989, Toba, Japan, pp. 263-271.

## Claims

1. A process for the production of a protein-containing product, **characterised in that** a source of vegetable protein (a) is subjected to a heat treatment, (b) is afterwards washed in one or more steps with water at a temperature of 50°C or lower, and (c) is afterwards subjected to a further heat treatment.

2. A process according to claim 1, in which the water is mains or tap water.

3. A process according to claim 1 or 2, in which the water has a pH of less than 7.

4. A process according to claim 1, 2 or 3, in which the water has a pH of at least 4.

5. A process according to claim 1 or 2, in which the water has a pH of between 5.5 and 7.

6. A process according to any of claims 1 to 5, in which one or more of the washing steps are conducted in a counter-current manner.

7. A process according to any of claims 1 to 6, in which the source of vegetable protein is washed with the water in from 3 to 7 steps.

8. A process according to any of claims 1 to 7, in which the source of vegetable protein is washed with the water in a plurality of steps and the said material is at least partially dewatered between successive washing steps.

9. A process according to any of claims 1 to 8, in which the water used in at least one washing step contains phytase.

10. A process according to claim 9, in which the phytase is employed in an amount of up to 1% by weight, relative to the weight of the source of vegetable protein, e.g. an amount of from 0.001 to 1.0% by weight, relative to the weight of the source of vegetable protein.

11. A process according to any of claims 1 to 10, in which from 4 to 10 parts by weight of water are used in the or each washing step per part of the source of vegetable protein.

12. A process according to any of claims I to 11 in which the washing is carried out at a temperature of up to 35°C, e.g. at a temperature of up to 20°C.

13. A process according to any of claims 1 to 12, in which, in the said first heat treatment, the vegetable-protein source is heated sufficiently to reduce its protein dispersibility index to a value that is less than 35%, e.g. less than 30%.

14. A process according to any of claims 1 to 13, in which, in said first heat treatment, the vegetable protein source is heated to a temperature of from 80°C to 150°C.

15. A process according to any of claims 1 to 14, in which the said first heat treatment is carried out in a desolventizing-toasting apparatus.

16. A process according to any of claims 1 to 15, in which, in the said further heat treatment, the vegetable-protein source is heated sufficiently to reduce its protein dispersibility index to a value that is less than 20%, e.g. less than 15%.

17. A process according to any of claims 1 to 16, in which, in the said further heat treatment, the vegetable-protein source is heated to a temperature of from 80° to 150°C.

18. A process according to any of claims 1 to 17, in which the washed material is at least partially dried.

19. A process according to claim 18, in which the drying of the washed material includes the step of decanting off water remaining from the last washing step.

20. A process according to claim 18 or 19, in which the washed material is subjected to a thermal drying step.

21. A process according to any of claims 1 to 20, in which the said further heat treatment comprises a thermal drying step.

22. A process according to claim 20 or 21 in which the thermal drying step is effected in a fluidized bed dryer or a rotating drum dryer.

23. A process according to any of claims 18 to 22, in which the washed material is dried to a moisture content of 12% by weight or less.

24. A process according to any of claims 1 to 23, in which the source of vegetable protein which is subjected to the washing steps is obtained from soybeans and/or other legumes and/or other oilseed vegetables.

25. A process according to claim 24, in which the said source of vegetable protein is defatted soy meal, defatted soy flour, defatted soybean meal, a texturized soy product, or a mixture of any two or more of these.

26. A protein-containing product'which comprises at least 60% of vegetable protein on a dry weight basis, from 0 to 2% of simple sugars, on a dry weight basis, a fat content of 0 to 1% on a dry weight basis, and a moisture content of 0 to 12% of the total weight of the product, and exhibits a trypsin inhibitor factor of 1.0 mg, or less, trypsin inhibited per gram of product.

27. A protein-containing product according to claim 26 having a content of phytate (calculated as phytic acid) of 0 to 0.5% by weight.

28. A protein-containing product according to claim 26 or 27, in which the content of isoflavones is 900 ppm or greater.

29. A composition in the form of a food for human consumption or a feed for livestock, which composition comprises a protein-containing product that has been produced by a process according to any one of claims 1 to 25 or a protein-containing product according to claim 26, 27 or 28, in admixture with at least one other ingredient selected from sources of nutrition and edible additives.

30. A composition according to claim 29, which comprises (a) a source of nutrition selected from oils, carbohydrates, proteins, vitamins, minerals, amino acids, growth promoters, organic acids, and mixtures of two or more of these and/or (b) an additive selected from processing aids, bio-colorants, antioxidants and mixtures of two or more of these.

31. A composition according to claim 29 or 30 which comprises a source of nutrition selected from milk powder, fishmeal, cereals, cereal by-products, lactose, meatmeal and other animal products, and lipids.

32. A composition according to claim 29, 30, or 31, which comprises the said protein-containing product in an amount of more than 5% by weight, preferably more than 10%, more preferably more than 15% by weight.

33. A method of feeding human beings or livestock **characterised in that** the human beings or livestock are provided with a protein-containing product that has been produced by a process according to any one of claims 1 to 25, or a protein-containing product according to claim 26, 28 or 28, or a composition according to any of claims 29 to 32.

34. A method according to claim 33, in which the livestock are selected from fish, crustaceans and monogastric animals, e.g. in which the livestock are selected from salmon, trout, shrimps and pigs, for instance piglets.

35. A method of improving the processability, e.g. pelletisability, of a feedstuff for livestock, which feedstuff contains a vegetable-protein-containing product, **characterised in that** a protein-containing product is used that has been produced by a process according to the first aspect of this invention, and is incorporated into the feedstuff in an amount of more than 5% by weight of the total feedstuff.

## Patentansprüche

1. Verfahren zur Herstellung eines Protein-enthaltendes Produktes, **dadurch gekennzeichnet, daß** eine pflanzliche Proteinquelle (a) einer Wärmebehandlung unterworfen wird, (b) danach in einem oder mehreren Schritten mit Wasser bei einer Temperatur von 50°C oder niedriger gewaschen wird, und (c) danach einer weiteren Wärmebehandlung unterworfen wird.

2. Verfahren nach Anspruch 1, wobei das Wasser Leitungs- oder Trinkwasser ist.

3. Verfahren nach Anspruch 1 oder 2, wobei das Wasser einen pH-Wert von weniger als 7 aufweist.

4. Verfahren nach Anspruch 1, 2 oder 3, wobei das Wasser einen pH-Wert von mindestens 4 aufweist.

5. Verfahren nach Anspruch 1 oder 2, wobei das Wasser einen pH-Wert zwischen 5,5 und 7 aufweist.

6. Verfahren nach einem der Ansprüche 1 bis 5, worin einer oder mehrere der Waschschritte in einem Gegenstromverfahren ausgeführt werden.

7. Verfahren nach einem der Ansprüche 1 bis 6, worin die pflanzliche Proteinquelle mit Wasser in drei bis sieben Schritten gewaschen wird.

8. Verfahren nach einem der Ansprüche 1 bis 7, worin die pflanzliche Proteinquelle mit dem Wasser in einer Vielzahl von Schritten gewaschen wird und das Material mindestens teilweise zwischen aufeinanderfolgenden Waschschritten entwässert wird.

9. Verfahren nach einem der Ansprüche 1 bis 8, wobei das Wasser in mindestens einem Waschschritt Phytase enthält.

10. Verfahren nach Anspruch 9, worin die Phytase in einer Menge von bis zu 1 Gew.-% bezogen auf das Gewicht der pflanzlichen Proteinquelle, z.B. in einer Menge von 0,001 bis 1,0 Gew.-% bezogen auf das Gewicht der pflanzlichen Proteinquelle verwendet wird.

11. Verfahren nach einem der Ansprüche 1 bis 10, worin 4 bis 10 Gewichtsteile Wasser in dem oder jedem Waschschritt pro Teil der pflanzlichen Proteinquelle verwendet werden.

12. Verfahren nach einem der Ansprüche 1 bis 11, worin das Waschen bei einer Temperatur bis zu 35°C, z.B. bei einer Temperatur von bis zu 20°C, durchgeführt wird.

13. Verfahren nach einem der Ansprüche 1 bis 12, worin in der ersten Wärmebehandlung die pflanzliche Proteinquelle ausreichend erhitzt wird, um ihren Proteindispersibilitätsindex auf einen Wert, der geringer als 35% ist, z.B. geringer als 30%, zu reduzieren.

14. Verfahren nach einem der Ansprüche 1 bis 13, worin in der ersten Wärmebehandlung die pflanzliche Proteinquelle auf eine Temperatur von 80°C bis 150°C erhitzt wird.

15. Verfahren nach einem der Ansprüche 1 bis 14, worin die erste Wärmebehandlung in einer Vorrichtung zum Entfernen von Lösungsmittel mittels Erwärmen durchgeführt wird.

16. Verfahren nach einem der Ansprüche 1 bis 15, worin in der weiteren Wärmebehandlung die pflanzliche Proteinquelle ausreichend erhitzt wird, um ihren Proteindispersibilitätsindex auf einen Wert, der geringer als 20% ist, z.B. geringer als 15%, zu reduzieren.

17. Verfahren nach einem der Ansprüche 1 bis 16, worin in der weiteren Wärmebehandlung die pflanzliche Proteinquelle auf eine Temperatur von 80° bis 150°C erhitzt wird.

18. Verfahren nach einem der Ansprüche 1 bis 17, worin das gewaschene Material mindestens teilweise getrocknet wird.

19. Verfahren nach Anspruch 18, wobei das Trocknen des gewaschenen Materials den Schritt des Abdekantierens des Wassers, welches vom letzten Waschschritt zurückgeblieben ist, einschließt.

20. Verfahren nach Anspruch 18 oder 19, worin das gewaschene Material einem thermischen Trocknungsschritt unterworfen wird.

21. Verfahren nach einem der Ansprüche 1 bis 20, wobei die weitere Wärmebehandlung einen thermischen Trocknungsschritt umfaßt.

22. Verfahren nach Anspruch 20 oder 21, wobei der thermische Trocknungsschritt in einem Wirbelschichttrockner oder in einem rotierenden Trommeltrockner bewirkt wird.

23. Verfahren nach einem der Ansprüche 18 bis 22, worin das gewaschene Material bis zu einem Feuchtigkeitsgehalt von 12 Gew.-% oder weniger getrocknet wird.

24. Verfahren nach einem der Ansprüche 1 bis 23, wobei die pflanzliche Proteinquelle, welche den Waschschritten unterworfen wird, aus Sojabohnen und/oder anderen Hülsenfrüchten und/oder anderen Ölsamenpflanzen erhalten wird.

25. Verfahren nach Anspruch 24, wobei die pflanzliche Proteinquelle ein entfettetes grobes Sojamehl, ein entfettetes feines Sojamehl, ein entfettetes Sojabohnenmehl, ein texturiertes Sojaprodukt oder eine Mischung aus zwei oder mehreren von diesen ist.

26. Protein-enthaltendes Produkt, welches mindestens 60% eines pflanzlichen Proteins auf Trockengewichtbasis, von 0 bis 2% einfache Zucker auf Trokkengewichtbasis, einen Fettgehalt von 0 bis 1% auf Trockengewichtbasis und einen Feuchtigkeitsgehalt von 0 bis 12% auf das Gesamtgewicht des Produktes umfaßt und einen Trypsin-hemmenden Faktor, welcher 1,0 mg oder weniger Trypsin pro Gramm Produkt hemmt, aufweist.

27. Protein-enthaltendes Produkt nach Anspruch 26, welches einen Inosithexaphosphatgehalt (berechnet als Phytinsäure) von 0 bis 0,5 Gew.-% aufweist.

28. Protein-enthaltendes Produkt nach Anspruch 26 oder 27, wobei der Gehalt von Isoflavonen 900 ppm oder größer ist.

29. Zusammensetzung in Form von Lebensmitteln für den menschlichen Verzehr oder eines Futters für Vieh, wobei die Zusammensetzung ein Protein-enthaltendes Produkt, welches durch ein Verfahren nach einem der Ansprüche 1 bis 25 hergestellt worden ist, oder ein Protein-enthaltendes Produkt nach Anspruch 26, 27 oder 28 in Beimischung mit mindestens einem anderen Bestandteil, welcher aus Nahrungsquellen und Quellen eßbarer Zusatzstoffe ausgewählt ist, umfaßt.

30. Zusammensetzung nach Anspruch 29, welche (a) eine Nahrungsquelle, ausgewählt aus Ölen, Kohlenhydraten, Proteinen, Vitaminen, Mineralien, Aminosäuren, wachstumsfördernde Stoffe, organischen Säuren und Mischungen von zwei oder mehreren von diesen, und/oder (b) einen Zusatzstoff, ausgewählt aus Verfahrenshilfsstoffen, Biofarbstoffen, Antioxidantien und Mischungen von zwei oder mehreren von diesen, umfaßt.

31. Zusammensetzung nach Anspruch 29 oder 30, welcher eine Nahrungsquelle, ausgewählt aus Milchpulver, Fischmehl, Getreidearten, Getreidenebenprodukten, Lactose, Fleischmehl und anderen Tierprodukten, und Fette umfaßt.

32. Zusammensetzung nach Anspruch 29, 30 oder 31, welche das Proteinenthaltende Produkt in einer Menge von mehr als 5 Gew.-%, vorzugsweise mehr als 10 Gew.-%, mehr bevorzugt mehr als 15 Gew.-%, umfaßt.

33. Verfahren zum Ernähren von Menschen oder Vieh, **dadurch gekennzeichnet, daß** die Menschen oder das Vieh mit einem Protein-enthaltenden Produkt, welches durch ein Verfahren nach einem der Ansprüche 1 bis 25 hergestellt worden ist, oder einem Protein-enthaltenden Produkt nach Anspruch 26, 27 oder 28 oder einer Zusammensetzung nach einem der Ansprüche 29 bis 32 versorgt werden.

34. Verfahren nach Anspruch 33, wobei das Vieh aus Fisch, Krebsen und Tieren mit einem Magen ausgewählt wird, z.B. in welchen das Vieh aus Lachs, Forelle, Garnelen und Schweinen, beispielsweise Ferkeln, ausgewählt wird.

35. Verfahren zum Verbessern der Verarbeitbarkeit, z.B. Pelletierbarkeit, eines Futtermittels für Vieh, wobei das Futtermittel ein pflanzliches Protein-enthaltendes Produkt enthält, **dadurch gekennzeichnet, daß** ein Protein-enthaltendes Produkt verwendet wird, welches durch ein Verfahren gemäß des ersten Aspektes dieser Erfindung hergestellt worden ist, und in das Futtermittel in einer Menge von mehr als 5 Gew.-% bezogen auf das gesamte Futtermittel eingeführt wird.

## Revendications

1. Procédé de production d'un produit contenant une protéine, **caractérisé en ce qu'**une source de protéine végétale (a) est soumise à un traitement thermique, (b) est ensuite lavée lors d'une ou de plusieurs étapes avec de l'eau à une température de 50 °C ou moins, et (c) est ensuite soumise à un autre traitement thermique.

2. Procédé selon la revendication 1, dans lequel l'eau est de l'eau de canalisation ou de l'eau du robinet.

3. Procédé selon la revendication 1 ou 2, dans lequel l'eau a un pH inférieur à 7.

4. Procédé selon la revendication 1, 2 ou 3, dans lequel l'eau a un pH au moins égal à 4.

5. Procédé selon la revendication 1 ou 2, dans lequel l'eau a un pH compris entre 5, 5 et 7.

6. Procédé selon l'une quelconque des revendications 1 à 5, dans lequel une ou plusieurs des étapes de lavage sont conduites à contre-courant.

7. Procédé selon l'une quelconque des revendications 1 à 6, dans lequel la source de protéine végétale est lavée avec l'eau lors de 3 à 7 étapes.

8. Procédé selon l'une quelconque des revendications 1 à 7, dans lequel la source de protéine végétale est lavée avec l'eau lors de plusieurs étapes, et dans lequel ledit matériau est au moins partiellement asséché entre les étapes de lavage successives.

9. Procédé selon l'une quelconque des revendications 1 à 8, dans lequel l'eau utilisée dans au moins une étape de lavage contient de la phytase.

10. Procédé selon la revendication 9, dans lequel la phytase est employée dans une quantité allant jusqu'à 1% en poids, par rapport au poids de la source de protéine végétale, par exemple dans une quantité de 0,001 à 1,0 % en poids, par rapport au poids de la source de protéine végétale.

11. Procédé selon l'une quelconque des revendications 1 à 10, dans lequel 4 à 10 parties en poids d'eau sont utilisées dans l'étape ou dans chaque étape de lavage pour 1 partie de la source de protéine végétale.

12. Procédé selon l'une quelconque des revendications 1 à 11, dans lequel le lavage est réalisé à une température allant jusqu'à 35 °C, par exemple à une température allant jusqu'à 20 °C.

13. Procédé selon l'une quelconque des revendications 1 à 12, dans lequel, dans ledit premier traitement thermique, la source de protéine végétale est chauffée suffisamment pour réduire son indice de dispersibilité des protéines à une valeur qui est inférieure à 35 %, par exemple inférieure à 30 %.

14. Procédé selon l'une quelconque des revendications 1 à 13, dans lequel, dans ledit premier traitement thermique, la source de protéine végétale est chauffée à une température de 80 °C à 150 °C.

15. Procédé selon l'une quelconque des revendications 1 à 14, dans lequel ledit premier traitement thermique est réalisé dans un appareil de désolvantation - grillage.

16. Procédé selon l'une quelconque des revendications 1 à 15, dans lequel, dans ledit autre traitement thermique, la source de protéine végétale est chauffée suffisamment pour réduire son indice de dispersibilité des protéines à une valeur qui est inférieure à 20 %, par exemple inférieure à 15 %.

17. Procédé selon l'une quelconque des revendications 1 à 16, dans lequel, dans ledit autre traitement thermique, la source de protéine végétale est chauffée à une température de 80 °C à 150 °C.

18. Procédé selon l'une quelconque des revendications 1 à 17, dans lequel le matériau lavé est au moins partiellement séché.

19. Procédé selon la revendication 18, dans lequel le séchage du matériau lavé comprend l'étape consistant à éliminer l'eau qui reste de la dernière étape de lavage par décantation.

20. Procédé selon la revendication 18 ou 19, dans lequel le matériau lavé est soumis à une étape de séchage thermique.

21. Procédé selon l'une quelconque des revendications 1 à 20, dans lequel ledit autre traitement thermique comprend une étape de séchage thermique.

22. Procédé selon la revendication 20 ou 21, dans lequel l'étape de séchage thermique est effectuée dans un séchoir en lit fluidisé ou dans un séchoir à tambour rotatif.

23. Procédé selon l'une quelconque des revendications 18 à 22, dans lequel le matériau lavé est séché jusqu'à une teneur en humidité de 12 % en poids ou moins.

24. Procédé selon l'une quelconque des revendications 1 à 23, dans lequel la source de protéine végétale qui est soumise aux étapes de lavage est obtenue à partir de graines de soja et/ou d'autres légumineuses et/ou d'autres végétaux à graines oléagineuses.

25. Procédé selon la revendication 24, dans lequel ladite source de protéine végétale est un tourteau de soja dégraissé, de la farine de soja dégraissée, un tourteau de fève de soja dégraissé, un produit de soja texturé, ou un mélange de deux de ces produits ou plus.

26. Produit contenant une protéine, qui comprend au moins 60 % de protéine végétale, sur une base de poids sec, 0 à 2 % de sucres simples, sur une base de poids sec, une teneur en graisse de 0 à 1 %, sur une base de poids sec, et une teneur en humidité de 0 à 12 % du poids total du produit, et qui présente un facteur inhibiteur de trypsine de 1,0 mg ou moins, de trypsine inhibée par gramme de produit.

27. Produit contenant une protéine selon la revendication 26, présentant une teneur en phytate (calculée en tant qu'acide phytique) de 0 à 0,5 % en poids.

28. Produit contenant une protéine selon la revendication 26 ou 27, dans lequel la teneur en isoflavones est de 900 ppm ou plus.

29. Composition sous la forme d'un aliment pour la consommation des humains ou d'un aliment pour bétail, laquelle composition comprend un produit contenant une protéine qui a été fabriqué selon un procédé selon l'une quelconque des revendications 1 à 25 ou un produit contenant une protéine selon la revendication 26, 27 ou 28, additionné d'au moins un autre ingrédient sélectionné parmi des sources de nutrition et des additifs comestibles.

30. Composition selon la revendication 29, qui comprend (a) une source de nutrition sélectionnée parmi des huiles, des glucides, des protéines, des vitamines, des minéraux, des acides aminés, des stimulateurs de croissance, des acides organiques, et des mélanges de deux de ceux-ci ou plus, et/ou (b) un additif sélectionné parmi des adjuvants de fabrication, des bio-colorants, des antioxydants et des mélanges de deux de ceux-ci ou plus.

31. Composition selon la revendication 29 ou 30, qui comprend une source de nutrition sélectionnée parmi de la poudre de lait, de la farine de poisson, des céréales, des produits dérivés de céréales, du lactose, de la farine de viande et d'autres produits animaux, et des lipides.

32. Composition selon la revendication 29, 30 ou 31, qui comprend ledit produit contenant une protéine dans une quantité supérieure à 5 % en poids, de préférence supérieure à 10 %, de façon plus préférée supérieure à 15 % en poids.

33. Méthode d'alimentation des humains ou du bétail, **caractérisée en ce que** l'on fournit aux humains ou au bétail un produit contenant une protéine qui a été fabriqué par un procédé selon l'une quelconque des revendications 1 à 25, ou un produit contenant une protéine selon la revendication 26, 27 ou 28, ou une composition selon l'une quelconque des revendications 29 à 32.

34. Méthode selon la revendication 33, dans laquelle le bétail sont sélectionnés parmi des poissons, des crustacés et des animaux monogastriques, par exemple dans laquelle le bétail est sélectionné parmi des saumons, des truites, des crevettes et des porcs, par exemple des porcelets.

35. Méthode d'amélioration de l'aptitude au traitement, par exemple de l'aptitude à la formation de granulés, d'un aliment pour bétail, ledit aliment pour bétail contenant un produit qui contient une protéine végétale, **caractérisée en ce que** l'on utilise un produit contenant une protéine qui a été fabriqué selon un procédé en accord avec le premier aspect de la présente invention, qui est incorporé dans l'aliment dans une quantité supérieure à 5 % en poids du poids total dudit aliment pour bétail.
